# EUROPÄISCHE PATENTSCHRIFT

(11) **EP 4 217 240 B1**
(45) Veröffentlichungstag und Bekanntmachung des Hinweises auf die Patenterteilung: **30.10.2024**
(21) Anmeldenummer: 21773743.6
(22) Anmeldetag: 08.09.2021
(51) Int. Cl.: B60R 21/207

(54) **AIRBAGVORRICHTUNG FÜR EINEN FAHRZEUGSITZ UND FAHRZEUGSITZ MIT EINER AIRBAGVORRICHTUNG**
AIRBAG DEVICE FOR A VEHICLE SEAT AND VEHICLE SEAT WITH AN AIRBAG DEVICE
DISPOSITIF DE COUSSIN GONFLABLE POUR UN SIÈGE DE VÉHICULE ET SIÈGE DE VÉHICULE AVEC UN DISPOSITIF DE COUSSIN GONFLABLE

(30) Priorität: 28.09.2020 DE 102020125263
(43) Veröffentlichungstag der Anmeldung: 02.08.2023
(73) Patentinhaber: Autoliv Development AB, 447 83 Vårgårda (SE)
(72) Erfinder: SÖHNCHEN, Arndt, 22765 Hamburg (DE); JABUSCH, Ronald, 25336 Elmshorn (DE); LANGHOFF, Hans-Jörg, 25474 Bönningstedt (DE); GLAESSER, Antto-Christian, 25474 Hasloh (DE); CIRSTEA, Alexandru, 25335 Elmshorn (DE); EHLERS, Jens, 25358 Horst (DE)
(74) Vertreter: Berkenbrink, Kai-Oliver
(86) Internationale Anmeldenummer: PCT/EP2021/074630
(87) Internationale Veröffentlichungsnummer: WO 2022/063571

(56) Entgegenhaltungen:
- WO-A1-2019/107073
- US-A1- 2019 248 322
- US-A1- 2019 299 903
- US-A1- 2020 254 953

## Beschreibung

Die vorliegende Erfindung betrifft eine Airbagvorrichtung für einen Fahrzeugsitz, mit mindestens einem Airbagmodul, wobei das mindestens eine Airbagmodul mindestens einen Airbag umfasst und zur Anbringung an einer Rückenlehne und/oder an einem Sitzkissen eines Fahrzeugsitzes eingerichtet ist, und mit mindestens einem Fangbandmechanismus für das Airbagmodul, wobei der Fangbandmechanismus mindestens eine an dem Airbag angebrachte Fangbandanordnung umfasst und wobei der Fangbandmechanismus zur Anbringung an der Rückenlehne und/oder an dem Sitzkissen des Fahrzeugsitzes eingerichtet ist. Die vorliegende Erfindung betrifft auch einen Fahrzeugsitz für ein Kraftfahrzeug, mit einer Rückenlehne, einem Sitzkissen und einer solchen Airbagvorrichtung.

Ein solcher Fahrzeugsitz ist beispielsweise aus US 2017/0259774 A1 bekannt, bei dem auf den einander gegenüberliegenden Seiten der Rückenlehne jeweils ein Airbagmodul vorgesehen ist, dessen Airbag mit einem Fangband verbunden ist. Die Fangbänder sind dazu vorgesehen, im Auslösefall eine Entfaltungsbewegung des sich entfaltenden Airbags zumindest teilweise vorzugeben und den Airbag in seinem entfalteten (aufgeblasenen) Zustand in einer vorgegebenen Position zu halten. Mit den in ihren festen Längen im Fahrzeugsitz einmal integrierten Fangbändern ist eine dynamische Beeinflussung des Entfaltungsvorgangs und der Anordnung des Airbags im entfalteten Zustand allerdings nicht möglich. Eine Airbagvorrichtung mit den Merkmalen des Oberbegriffs des Anspruchs 1 ist aus US 2019/0248322 A1 bekannt. Weitere Airbagvorrichtungen sind aus US 2019/0299903 A1, US 2020/0254953 A1 und WO 2019/107073 A2 bekannt.

Aufgabe der vorliegenden Erfindung ist es daher, die mit Bezug zum Stand der Technik geschilderten Nachteile zu beseitigen und insbesondere eine Airbagvorrichtung sowie einen Fahrzeugsitz mit einer solchen Airbagvorrichtung anzugeben, mit denen der Entfaltungsvorgang oder die Positionierung des Airbags im entfalteten Zustand beeinflusst werden kann.

Gelöst wird die Aufgabe durch eine Airbagvorrichtung mit den Merkmalen des unabhängigen Anspruchs. Vorteilhafte Weiterbildungen der Airbagvorrichtung sind in den abhängigen Ansprüchen und in der Beschreibung angegeben, wobei einzelne Merkmale der vorteilhaften Weiterbildungen in technisch sinnvoller Weise miteinander kombinierbar sind.

Gelöst wird die Aufgabe insbesondere durch eine Airbagvorrichtung mit den eingangs genannten Merkmalen, wobei der Fangbandmechanismus eine Straffvorrichtung für die Fangbandanordnung umfasst, wobei die Straffvorrichtung ein linear beschleunigbares Straffelement umfasst, welches derart mit der Fangbandanordnung gekoppelt ist, dass ein durch die Auslösung der Straffvorrichtung bedingter Straffweg des Airbags mindestens dem 1,5fachen des von dem Straffelement zurückgelegten Wegs entspricht.

Das Airbagmodul kann insbesondere ein Gehäuse umfassen, dessen Form zur Anbringung an die Rückenlehne beziehungsweise an das Sitzkissen des Fahrzeugsitzes ausgebildet ist. In oder an dem Gehäuse kann auch ein Gasgenerator angeordnet sein, der mit dem Airbag strömungstechnisch verbunden ist, sodass dieser im Auslösefall durch das von dem Gasgenerator erzeugte Gas entfaltet wird.

Die Fangbandanordnung des Fangbandmechanismus besteht bevorzugt aus genau einem textilen Element, wie einem (Fang-)Band oder einem Seil, kann aber auch aus mehreren miteinander oder mit dem Airbag verbundenen textilen Elementen bestehen. Jede Fangbandanordnung ist mit einem Ende mit dem Airbag verbunden und kann mit dem anderen Ende an dem Fahrzeugsitz, insbesondere an der Rückenlehne oder an dem Sitzkissen insbesondere unbeweglich zu diesen angebracht werden.

Es ist nun vorgesehen, dass zumindest eine Fangbandanordnung mit einer Straffvorrichtung gekoppelt ist. Die Straffvorrichtung weist mindestens ein beschleunigbares Straffelement auf, wobei das Straffelement beispielsweise elektromechanisch oder pyrotechnisch beschleunigbar ist. Durch Betätigen des elektromechanischen beziehungsweise pyrotechnischen Antriebs kann also ein Straffvorgang der zugehörigen Fangbandanordnung ausgelöst werden. Während eines solchen Straffvorgangs wird insbesondere das mit dem Airbag verbundene und sich während des Entfaltens des Airbags mit dem Airbag bewegende Ende der Fangbandanordnung eingezogen, wodurch der Entfaltungsvorgang oder die Position des entfalteten Airbags geändert werden kann. Als Straffweg wird demgemäß die Länge des Wegs bezeichnet, um die das mit dem Airbag verbundene Ende der Fangbandanordnung (bei straffer Fangbandanordnung) während des Straffvorgangs (also zwischen Straffbeginn und Straffende) eingezogen wird. Der von dem Straffelement zurückgelegte Weg entspricht hingegen der Länge des Weges, welcher das Straffelement während des Straffvorgangs (also zwischen dem Straffbeginn und dem Straffende) zurücklegt. Da die Fangbandanordnung mit dem Straffelement gekoppelt ist, geschieht die Bewegung des Straffelements also gleichzeitig mit der Bewegung des mit dem Airbag gekoppelten Endes der Fangbandanordnung.

Die Erfindung schlägt nun vor, dass der Straffweg mindestens dem 1,5fachen bevorzugt mindestens oder genau dem Doppelten, besonders bevorzugt mindestens oder genau dem Dreifachen oder sogar mindestens dem Vierfachen oder genau dem Vierfachen des von dem Straffelement zurückgelegten Wegs entspricht. Da somit der Straffweg wesentlich länger ist als der von dem Straffelement zurückgelegte Weg, kann die Straffvorrichtung wesentlich kompakter ausgebildet sein, da der Raum für die insbesondere lineare Bewegung des Straffelements geringer ist als der Straffweg des Airbags. Alternativ kann bei gleicher Länge des von dem Straffelement zurückgelegten Wegs der Straffweg vergrößert werden.

Die Straffvorrichtung kann insbesondere eine Halterung aufweisen, mit der die Straffvorrichtung an der Rückenlehne des Fahrzeugsitzes befestigbar ist, wobei sich die Halterung im eingebauten Zustand von einer oberen Rahmenstrebe der Rückenlehne zur Rückseite der Rückenlehne erstreckt. An der Halterung kann nicht nur das Straffelement mit seinem insbesondere pyrotechnischen Antrieb befestigt sein, sondern auch weitere Elemente der Straffvorrichtung. Insbesondere kann die Halterung bereits eine Befestigung für das Ende der Fangbandanordnung umfassen, welches im eingebauten Zustand ortsfest zu dem Fahrzeugsitz angeordnet ist. Somit umfasst die erfindungsgemäße Airbagvorrichtung mit dem Airbagmodul und dem an der Halterung befestigten Fangbandmechanismus nur zwei Module, die einfach während der Montage an einem Fahrzeugsitz anbringbar sind, wobei die zwei Module über die Fangbandanordnung miteinander verbunden sind.

In einer Ausführungsform kann vorgesehen sein, dass das an dem Fahrzeugsitz befestigbare Ende der Fangbandanordnung unbeweglich zu dem Fahrzeugsitz festlegbar ist und das Straffelement während des Straffvorgangs zu der Fangbandanordnung bewegbar ist. Somit wird also nicht die gesamte Fangbandanordnung durch das Straffelement bewegt, sondern die durch den Entfaltungsvorgang straffe Fangbandanordnung wird zumindest abschnittsweise gegenüber dem Festlegungspunkt am Fahrzeugsitz verschoben. Je nach (Zwangs-)Führung der Fangbandanordnung zwischen dem Straffelement und dem an den Airbag angebrachten Ende kann somit ein größerer Straffweg erzeugt werden als die Länge des durch das Straffelement zurückgelegten Wegs. Hierbei kann durch die Anordnung der (Zwangs-) Führung(en) eine flaschenzugartige Anordnung der Fangbandanordnung ausgebildet werden, sodass der Straffweg größer ist als der von dem Straffelement zurückgelegte Weg. Die Bewegung des Straffelements erfolgt dabei insbesondere quer zu einem Abschnitt der Fangbandanordnung in der Ausgangsstellung. Das Straffelement kann hierbei auf einen, zwei oder mehrere Abschnitte der Fangbandanordnung gleichzeitig wirken.

Das Straffelement ist also dasjenige Element, welches während der Straffbewegung auf die Fangbandanordnung wirkt und von dem Antrieb angetrieben wird, wobei das Straffelement durch Auslösung des Antriebs der Straffvorrichtung insbesondere quer zur Erstreckungsrichtung der Fangbandanordnung beschleunigt wird. Das Straffelement kann beispielsweise eine Öse umfassen, durch die die Fangbandanordnung hindurchgeführt ist. Der Fangbandmechanismus kann ein erstes Führungselement für die Fangbandanordnung aufweisen, welches derart insbesondere an der Halterung angeordnet ist, dass die Fangbandanordnung zwischen dem Straffelement und dem Airbag mittels des ersten Führungselements zwangsgeführt ist.

In diesem Zusammenhang ist insbesondere vorgesehen, dass einerseits das Ende der Fangbandanordnung unmittelbar benachbart (also insbesondere innerhalb von weniger als 5 cm, oder sogar von weniger als 2 cm) zu dem in seiner Ausgangsstellung befindlichen Straffelement an dem Fahrzeugsitz festlegbar ist (und insbesondere an der Halterung festgelegt ist) und dass andererseits das erste Führungselement ebenfalls unmittelbar benachbart (insbesondere innerhalb von 5 cm, bevorzugt innerhalb von 2 cm) zu dem in seiner Ausgangsstellung befindlichen Straffelement angeordnet ist. Somit ist das ortsfeste Ende der Fangbandanordnung und das erste Führungselement bevorzugt höchstens 10 cm, besonders bevorzugt höchstens 5 cm voneinander entfernt, wobei bei einer Anordnung des Straffelements zwischen dem ortsfesten Ende und dem ersten Führungselement der Straffweg fast das Doppelte des von dem Straffelement zurückgelegten Wegs entspricht.

In einer Ausführungsform kann vorgesehen sein, dass das Straffelement der Straffvorrichtung so an der Rückenlehne des Fahrzeugsitzes insbesondere über die Halterung anbringbar beziehungsweise angebracht ist, dass das Straffelement während der Straffbewegung in Richtung eines insbesondere seitlichen Rahmens der Rückenlehne einen linearen Weg zurücklegt. Sollte es einmal zu einer unvorhergesehenen Fehlfunktion kommen und das Straffelement nach der vorgesehenen Straffbewegung nicht gestoppt werden können, so würde dieses gegen den Rahmen prallen und somit keine weiteren Schädigungen ausüben.

Das Straffelement führt zwischen seiner Ausgangsstellung und seiner Stellung am Ende des Straffvorgangs also bevorzugt eine gradlinige Bewegung aus.

Insbesondere in diesem Zusammenhang kann vorgesehen sein, dass die Straffvorrichtung auf einer Rückseite der Rückenlehne anbringbar ist, wobei der Fangbandmechanismus ein zweites Führungselement für die Fangbandanordnung umfasst, welches an einer oberen Seite der Rückenlehne derart insbesondere mittels der Halterung anbringbar ist, dass die Fangbandanordnung in der Ausgangsstellung von der Rückseite der Rückenlehne zu dem an einer Seite der Rückenlehne angeordneten Airbagmodul umgelenkt wird. Bei dieser Ausführungsform verläuft die Fangbandanordnung also insbesondere von ihrem auf der Rückseite der Rückenlehne angeordneten ortsfesten Ende entlang des Straffelements, durch das erste Führungselement, durch das zweite Führungselement und dann auf der Oberseite der Rückenlehne zu dem Airbagmodul an der Seite der Rückenlehne. Die Zwangsführung der Fangbandanordnung ist auch während des Entfaltens des Airbags vorgegeben, sodass sich die Ausrichtung desjenigen Abschnitts der Fangbandanordnung zwischen dem zweiten Führungselement und dem an dem Airbag befestigten Ende während des Entfaltens ändert, wobei durch den Straffvorganges die Länge des Abschnitts der Fangbandanordnung zwischen dem zweiten Führungselement und dem an dem Airbag befestigten Ende verkürzt wird.

Das zweite Führungselement des Fangbandmechanismus kann insbesondere durch die Ausgestaltung seiner mit der Fangbandanordnung in Kontakt kommenden Oberflächenstruktur derart ausgebildet sein, dass die Fangbandanordnung in einer Straffrichtung durch das zweite Führungselement beweglich ist und in einer der Straffrichtung entgegengesetzten Richtung in seiner Beweglichkeit gehemmt oder blockiert wird. Somit wird am Ende des Straffvorgangs die Straffstellung nicht nur durch das Straffelement gehalten, sondern auch durch das zweite Führungselement. Das zweite Führungselement kann dabei eine Art Kanal für die Fangbandanordnung (insbesondere Seil) bilden, wobei die den Kanal begrenzende Oberflächenstruktur derart ausgebildet ist, dass die Fangbandanordnung nur in eine Richtung ohne größeren Widerstand bewegbar ist.

In einer bevorzugten Ausführungsform umfasst die Airbagvorrichtung zwei Airbagmodule, welche an zwei einander gegenüberliegenden Seiten der Rückenlehne anordenbar sind. In diesem Fall kann jedem Airbagmodul ein Fangbandmechanismus zugeordnet sein, wobei vorgesehen sein kann, dass der Antrieb, das angetriebene Straffelement sowie die Führungen des zweiten Fangbandmechanismus ebenfalls an der einen Halterung befestigt sind.

Die Erfindung sowie das technische Umfeld werden im Folgenden anhand der Figuren beispielshaft erläutert. Die Figuren zeigen schematisch
- Figur 1:: eine Rückansicht auf einen Fahrzeugsitz,
- Figur 2:: eine Perspektivansicht der Rückseite des Fahrzeugsitzes,
- Figur 3:: eine Perspektivansicht mit entfalteten Airbags vor einem Straffvorgang,
- Figur 4:: die Perspektivansicht nach dem Straffvorgang,
- Figur 5:: eine Rückansicht nach dem Straffvorgang,
- Figur 6:: eine Perspektivansicht von vorne mit einem Insassen vor dem Straffvorgang mit entfalteten Airbags,
- Figur 7:: die Darstellung gemäß Figur 6 nach dem Straffvorgang,
- Figur 8:: eine Detailansicht eines Führungselements und
- Figur 9:: eine Ausführungsform eines Fahrzeugsitzes mit nur einem Airbagmodul.

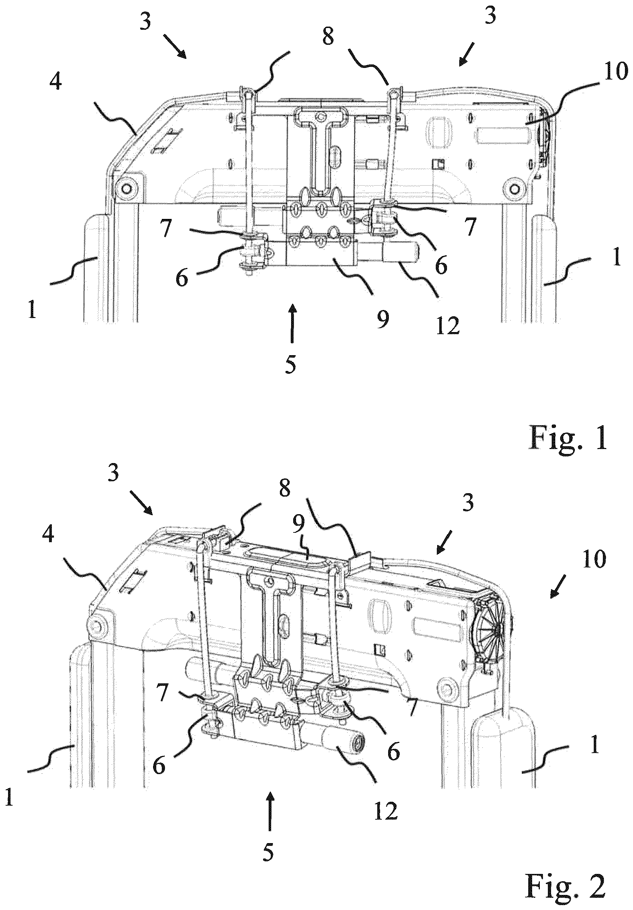

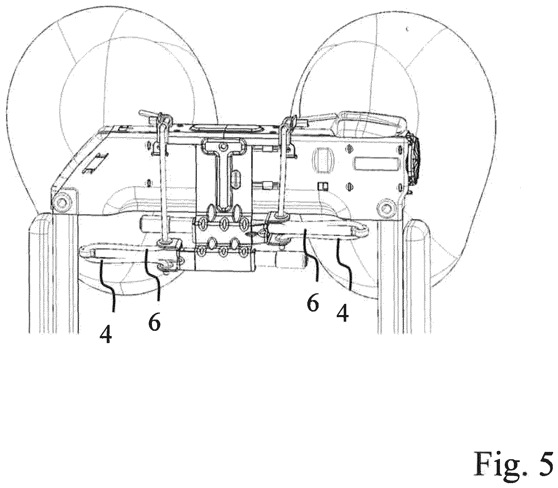

Die in den Figuren 1 bis 8 dargestellte Airbagvorrichtung ist an einer Rückenlehne 10 eines Fahrzeugsitzes befestigt. Die Airbagvorrichtung umfasst zwei Airbagmodule 1, die außen an einem seitlichen Rahmen der Rückenlehne 10 des Fahrzeugsitzes angeordnet sind. In einem Gehäuse des Airbagmoduls 1 ist jeweils ein Airbag 2 in einem gefalteten Zustand angeordnet.

Die Airbagvorrichtung umfasst zudem zwei Fangbandmechanismen 3, die jeweils eine als Seil ausgebildete Fangbandanordnung 4 umfassen. Die Fangbandanordnung 4 ist jeweils mit einem Ende mit einem Airbag 2 und mit dem anderen Ende an einer Halterung 9 befestigt. Von der ortsfesten Befestigung an der Halterung 9 ist die Fangbandanordnung durch ein Straffelement 6, durch ein erstes Führungselement 7 und ein zweites Führungselement 8 geführt, die alle ebenfalls an der Halterung 9 angeordnet sind. Das Straffelement 6 ist mit einem pyrotechnischen Antrieb 12 verbunden. Das Straffelement 6 kann durch den pyrotechnischen Antrieb 12 in Richtung des seitlichen Rahmens der Rückenlehne 10 linear beschleunigt werden.

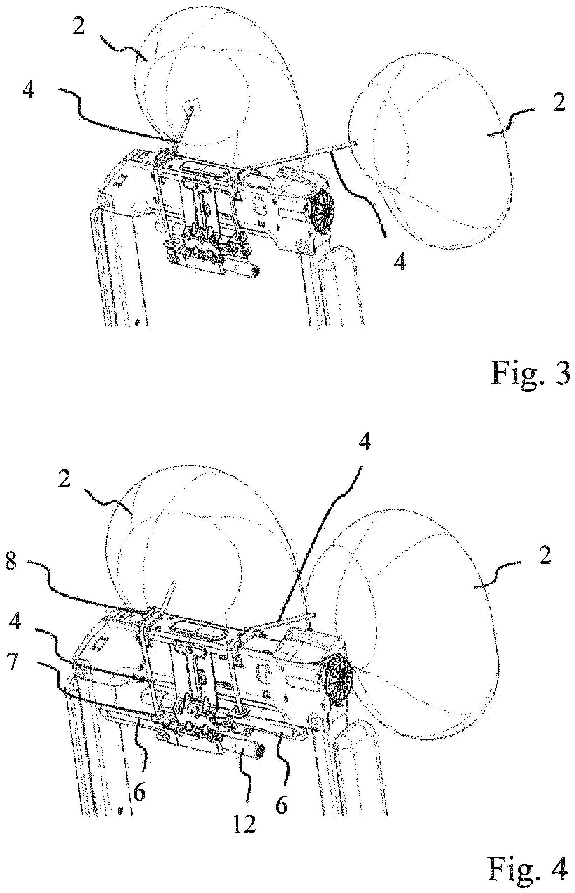

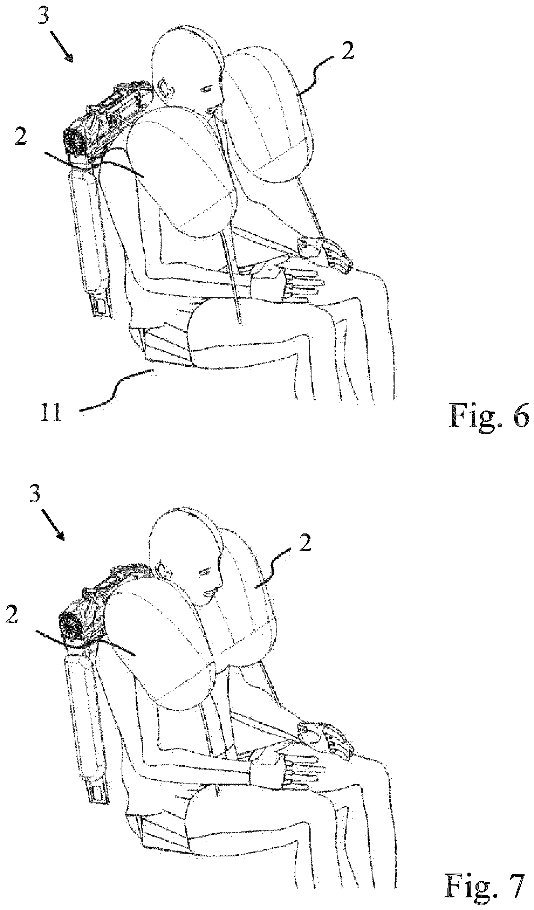

In den Figuren 3 und 6 ist ein entfalteter Zustand der Airbags 2 gezeigt, die diese einnehmen, nachdem ein zugehöriger Gasgenerator gezündet wurde. In diesem Zustand sind die Airbags 2 vor den Schultern des Insassen angeordnet. Wie insbesondere aus den Figuren 4, 5 und 7 hervorgeht, kann durch Auslösung des pyrotechnischen Antriebs 12 das zugehörige Straffelement 6 beschleunigt werden, wodurch das mit dem zugehörigen Airbag 2 verbundene Ende der Fangbandanordnung 4 in Richtung der Rückenlehne 10 und somit auf die Schultern des Insassen gezogen wird. Hierbei wird die Fangbandanordnung 4 durch das erste Führungselement 7 und das zweite Führungselement 8 gezogen, während das andere Ende der Fangbandanordnung 4 stationär an dem Halter 9 gehalten ist. Aufgrund dieser Führung der Fangbandanordnung 4 ist der von den Airbags 2 zurückgelegte Straffweg größer als der von dem Straffelement 6 zurückgelegte Weg.

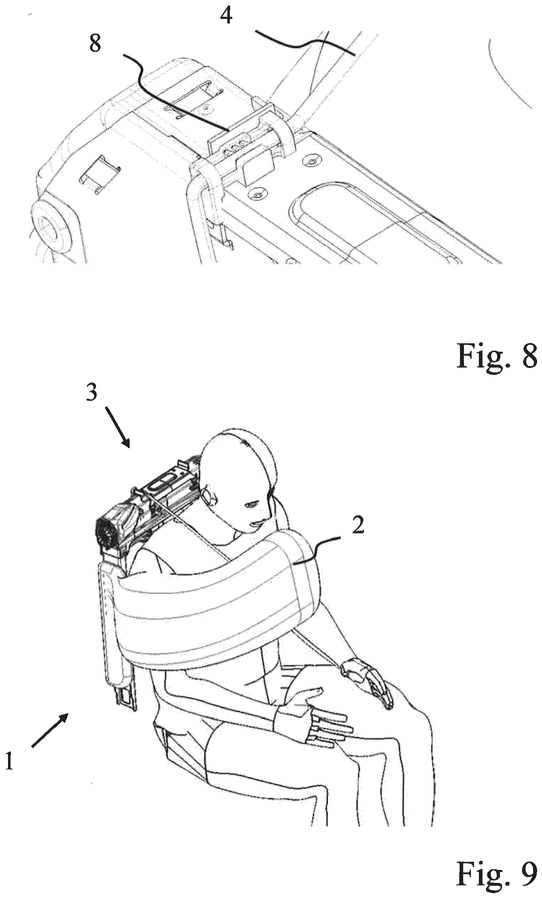

Aus Figur 8 ist zu erkennen, dass die zweite Führungseinrichtung 8 aufgrund ihrer mit der Fangbandanordnung 4 in Kontakt kommenden Oberflächenstruktur (mehrere hintereinander schräg angeordnete Rippen) so ausgebildet ist, dass die Fangbandanordnung 4 in Straffrichtung durch das zweite Führungselement 8 bewegbar ist, während eine Bewegung der Fangbandanordnung 4 in die entgegengesetzte Richtung gehemmt beziehungsweise blockiert ist.

In Figur 9 ist eine Ausführungsform der Airbagvorrichtung gezeigt, die nur ein Airbagmodul 1 und entsprechend auch nur einen Fangbandmechanismus 3 umfasst. Der zugehörige Airbag 2 entfaltet sich im Auslösefall vor die Brust des Insassen und kann mittels der Fangbandanordnung 4 auf den Insassen zu bewegt werden.

### Bezugszeichenliste

- 1: Airbagmodul
- 2: Airbag
- 3: Fangbandmechanismus
- 4: Fangbandanordnung
- 5: Straffvorrichtung
- 6: Straffelement
- 7: erstes Führungselement
- 8: zweites Führungselement
- 9: Halterung
- 10: Rückenlehne
- 11: Sitzkissen
- 12: pyrotechnischer Antrieb

## Patentansprüche

1. Airbagvorrichtung für einen Fahrzeugsitz, mit
- mindestens einem Airbagmodul (1), wobei das mindestens eine Airbagmodul (1) mindestens einen Airbag (2) umfasst und zur Anbringung an dem Fahrzeugsitz eingerichtet ist, und
- mindestens einem Fangbandmechanismus (3) für das Airbagmodul (1), wobei der Fangbandmechanismus (3) mindestens eine an dem Airbag (2) angebrachte Fangbandanordnung (4) umfasst und zur Anbringung an dem Fahrzeugsitz eingerichtet ist,
wobei
der Fangbandmechanismus (3) eine Straffvorrichtung (5) für die Fangbandanordnung (4) umfasst, wobei die Straffvorrichtung (5) ein linear beschleunigbares Straffelement (6) umfasst,
**dadurch gekennzeichnet, dass**
das Straffelement (6) derart mit der Fangbandanordnung (4) gekoppelt ist, dass ein durch die Auslösung der Straffvorrichtung (5) bedingter Straffweg des Airbags (2) mindestens dem 1,5fachen des von dem Straffelement (6) zurückgelegten Wegs entspricht.

2. Airbagvorrichtung nach Anspruch 1, wobei das an dem Fahrzeugsitz befestigbare Ende der Fangbandanordnung (4) unbeweglich zu dem Fahrzeugsitz festlegbar ist und das Straffelement (6) während des Straffvorganges zu der Fangbandanordnung (4) bewegbar ist.

3. Airbagvorrichtung nach Anspruch 1 oder 2, wobei der Fangbandmechanismus (3) ein erstes Führungselement (7) für die Fangbandanordnung (4) aufweist, wobei das erste Führungselement (7) derart angeordnet ist, dass die Fangbandanordnung (4) zwischen dem Straffelement (6) und dem Airbag (2) mittels des ersten Führungselements (7) zwangsgeführt ist.

4. Airbagvorrichtung nach einem der vorhergehenden Ansprüche, wobei das Ende der Fangbandanordnung (4) unmittelbar benachbart zu dem in seiner Ausgangsstellung befindlichen Straffelement (6) an dem Fahrzeugsitz festlegbar ist und das erste Führungselement (7) unmittelbar benachbart zu dem in seiner Ausgangsstellung befindlichen Straffelement (6) angeordnet ist.

5. Airbagvorrichtung nach einem der vorhergehenden Ansprüche, wobei ein Straffelement (6) der Straffvorrichtung (5) so an der Rückenlehne (10) des Fahrzeugsitzes anbringbar ist, dass das Straffelement (6) in Richtung eines insbesondere seitlichen Rahmens der Rückenlehne (10) einen linearen Weg zurücklegt.

6. Airbagvorrichtung nach einem der vorhergehenden Ansprüche, wobei die Straffvorrichtung (5) auf einer Rückseite der Rückenlehne (10) anbringbar ist und wobei der Fangbandmechanismus (3) ein zweites Führungselement (8) umfasst, welches an einer oberen Seite der Rückenlehne (10) derart anbringbar ist, dass die Fangbandanordnung (4) in der Ausgangsstellung von der Rückseite der Rückenlehne (10) zu dem an einer Seite der Rückenlehne (10) angeordneten Airbagmodul (1) umgelenkt wird.

7. Airbagvorrichtung nach einem der vorhergehenden Ansprüche, wobei ein zweites Führungselement (8) des Fangbandmechanismus (3) derart ausgebildet ist, dass die Fangbandanordnung (4) in einer Straffrichtung durch das zweite Führungselement (8) beweglich ist und in einer der Straffrichtung entgegengesetzten Richtung in seiner Beweglichkeit gehemmt oder blockiert wird.

8. Airbagvorrichtung nach einem der vorhergehenden Ansprüche, wobei die Straffvorrichtung (5) eine Halterung (9) umfasst, mittels der die Straffvorrichtung (5) an der Rückenlehne (10) befestigbar ist, wobei sich die Halterung (9) im eingebauten Zustand von einer oberen Rahmenstrebe zur Rückseite der Rückenlehne (10) erstreckt.

9. Airbagvorrichtung nach einem der vorhergehenden Ansprüche, wobei die Airbagvorrichtung zwei Airbagmodule (1) umfasst und die zwei Airbagmodule (1) an gegenüberliegenden Seiten der Rückenlehne (10) anordenbar sind, wobei jedem Airbagmodul (1) ein Fangbandmechanismus (3) zugeordnet ist.

10. Fahrzeugsitz für ein Kraftfahrzeug, mit
- einer Rückenlehne (10),
- einem Sitzkissen (11) und
- einer Airbagvorrichtung nach einem der vorhergehenden Ansprüche.

## Claims

1. Airbag apparatus for a vehicle seat, comprising
- at least one airbag module (1), wherein the at least one airbag module (1) comprises at least one airbag (2) and is designed for attachment to the vehicle seat, and
- at least one catch strap mechanism (3) for the airbag module (1), wherein the catch strap mechanism (3) comprises at least one catch strap arrangement (4) attached to the airbag (2) and is designed for attachment to the vehicle seat,
wherein
the catch strap mechanism (3) comprises a tightening device (5) for the catch strap arrangement (4), wherein the tightening device (5) comprises a tightening element (6) which can be linearly accelerated,
**characterized in that**
the tightening element (6) is coupled to the catch strap arrangement (4) such that a tightening path of the airbag (2) caused by the triggering of the tightening device (5) corresponds to at least 1.5 times the path covered by the tightening element (6).

2. Airbag apparatus according to claim 1, wherein the end of the catch strap arrangement (4) which can be fastened to the vehicle seat can be fixed so as to be immovable relative to the vehicle seat, and the tightening element (6) can be moved relative to the catch strap arrangement (4) during the tightening process.

3. Airbag apparatus according to either claim 1 or claim 2, wherein the catch strap mechanism (3) comprises a first guide element (7) for the catch strap arrangement (4), wherein the first guide element (7) is arranged such that the catch strap arrangement (4) is forcibly guided between the tightening element (6) and the airbag (2) by means of the first guide element (7).

4. Airbag apparatus according to any of the preceding claims, wherein the end of the catch strap arrangement (4) can be fixed to the vehicle seat directly adjacently to the tightening element (6) which is in its initial position, and the first guide element (7) is arranged directly adjacently to the tightening element (6) which is in its initial position.

5. Airbag apparatus according to any of the preceding claims, wherein a tightening element (6) of the tightening device (5) can be attached to the backrest (10) of the vehicle seat such that the tightening element (6) covers a linear path in the direction of an in particular lateral frame of the backrest (10).

6. Airbag apparatus according to any of the preceding claims, wherein the tightening device (5) can be attached to a rear side of the backrest (10), and wherein the catch strap mechanism (3) comprises a second guide element (8) which can be attached to an upper side of the backrest (10) such that the catch strap arrangement (4) is deflected, in the initial position, from the rear side of the backrest (10) toward the airbag module (1) arranged on one side of the backrest (10).

7. Airbag apparatus according to any of the preceding claims, wherein a second guide element (8) of the catch strap mechanism (3) is designed such that the catch strap arrangement (4) is movable in a tightening direction by the second guide element (8) and is inhibited or blocked in its mobility in a direction counter to the tightening direction.

8. Airbag apparatus according to any of the preceding claims, wherein the tightening device (5) comprises a holder (9), by means of which the tightening device (5) can be fastened to the backrest (10), wherein, in the installed state, the holder (9) extends from an upper frame strut to the rear side of the backrest (10).

9. Airbag apparatus according to any of the preceding claims, wherein the airbag apparatus comprises two airbag modules (1), and the two airbag modules (1) can be arranged on opposite sides of the backrest (10), wherein a catch strap arrangement (3) is associated with each airbag module (1).

10. Vehicle seat for a motor vehicle, comprising
- a backrest (10),
- a seat cushion (11), and
- an airbag apparatus according to any of the preceding claims.

## Revendications

1. Dispositif de coussin gonflable de sécurité pour un siège de véhicule, comportant
- au moins un module de coussin gonflable de sécurité (1), dans lequel l'au moins un module de coussin gonflable de sécurité (1) comprend au moins un coussin gonflable de sécurité (2) et est conçu pour être monté sur le siège de véhicule, et
- au moins un mécanisme de bande d'arrêt (3) pour le module de coussin gonflable de sécurité (1), dans lequel le mécanisme de bande d'arrêt (3) comprend au moins un agencement de bande d'arrêt (4) monté sur le coussin gonflable de sécurité (2) et est conçu pour être monté sur le siège de véhicule,
dans lequel
le mécanisme de bande d'arrêt (3) comprend un dispositif tendeur (5) pour l'agencement de bande d'arrêt (4), dans lequel le dispositif tendeur (5) comprend un élément tendeur (6) pouvant être accéléré de manière linéaire,
**caractérisé en ce que**
l'élément tendeur (6) est accouplé à l'agencement de bande d'arrêt (4) de telle sorte qu'un trajet de tension du coussin gonflable de sécurité (2), dû au déclenchement du dispositif tendeur (5), correspond au moins à 1,5 fois le trajet parcouru par l'élément tendeur (6).

2. Dispositif de coussin gonflable de sécurité selon la revendication 1, dans lequel l'extrémité, qui peut être fixée au siège de véhicule, de l'agencement de bande d'arrêt (4) peut être fixée de manière inamovible sur le siège de véhicule et l'élément tendeur (6) peut être déplacé vers l'agencement de bande d'arrêt (4) pendant le processus de tension.

3. Dispositif de coussin gonflable de sécurité selon la revendication 1 ou 2, dans lequel le mécanisme de bande d'arrêt (3) présente un premier élément de guidage (7) pour l'agencement de bande d'arrêt (4), dans lequel le premier élément de guidage (7) est agencé de telle sorte que l'agencement de bande d'arrêt (4) est guidé par force entre l'élément tendeur (6) et le coussin gonflable de sécurité (2), à l'aide du premier élément de guidage (7).

4. Dispositif de coussin gonflable de sécurité selon l'une des revendications précédentes, dans lequel l'extrémité de l'agencement de bande d'arrêt (4) peut être fixée sur le siège de véhicule, de manière immédiatement adjacente à l'élément tendeur (6) dans sa position initiale, et le premier élément de guidage (7) est agencé de manière immédiatement adjacente à l'élément tendeur (6) dans sa position initiale.

5. Dispositif de coussin gonflable de sécurité selon l'une des revendications précédentes, dans lequel un élément tendeur (6) du dispositif tendeur (5) peut être monté sur le dossier (10) du siège de véhicule de telle sorte que l'élément tendeur (6) parcourt un trajet linéaire en direction d'un châssis, en particulier latéral, du dossier (10).

6. Dispositif de coussin gonflable de sécurité selon l'une des revendications précédentes, dans lequel le dispositif tendeur (5) peut être monté sur un côté arrière du dossier (10), et dans lequel le mécanisme de bande d'arrêt (3) comprend un second élément de guidage (8) qui peut être monté sur un côté supérieur du dossier (10) de telle sorte que l'agencement de bande d'arrêt (4) est dévié dans sa position initiale depuis le côté arrière du dossier (10) vers le module de coussin gonflable de sécurité (1) agencé sur un côté du dossier (10).

7. Dispositif de coussin gonflable de sécurité selon l'une des revendications précédentes, dans lequel un second élément de guidage (8) du mécanisme de bande d'arrêt (3) est réalisé de telle sorte que l'agencement de bande d'arrêt (4) peut être déplacé dans une direction de tension par le second élément de guidage (8) et que son déplacement est freiné ou bloqué dans une direction opposée à la direction de tension.

8. Dispositif de coussin gonflable de sécurité selon l'une des revendications précédentes, dans lequel le dispositif tendeur (5) comprend un support (9) à l'aide duquel le dispositif tendeur (5) peut être fixé sur le dossier (10), dans lequel le support (9) s'étend, à l'état monté, d'une traverse supérieure du châssis au côté arrière du dossier (10).

9. Dispositif de coussin gonflable de sécurité selon l'une des revendications précédentes, dans lequel le dispositif de coussin gonflable de sécurité comprend deux modules de coussin gonflable de sécurité (1) et les deux modules de coussin gonflable de sécurité (1) peuvent être agencés sur des côtés opposés du dossier (10), dans lequel un mécanisme de bande d'arrêt (3) est associé à chaque module de coussin gonflable de sécurité (1).

10. Siège de véhicule pour un véhicule automobile, comportant
- un dossier (10),
- un coussin de siège (11) et
- un dispositif de coussin gonflable de sécurité selon l'une des revendications précédentes.
